# EUROPÄISCHE PATENTSCHRIFT

(11) **EP 0 765 368 B1**
(45) Veröffentlichungstag und Bekanntmachung des Hinweises auf die Patenterteilung: **07.04.1999**
(21) Anmeldenummer: 95922506.1
(22) Anmeldetag: 06.06.1995
(51) Int. Cl.: C09K 7/06, C09K 7/02

(54) **LINEARE ALPHA-OLEFINE ENTHALTENDE FLIESSFÄHIGE BOHRLOCHBEHANDLUNGSMITTEL, INSBESONDERE ENTSPRECHENDE BOHRSPÜLUNGEN**
LINEAR ALPHA-OLEFIN-CONTAINING FLUID BORE-HOLE TREATMENT AGENTS, IN PARTICULAR CORRESPONDING BORE-HOLE FLUSHING AGENTS
PRODUITS FLUIDES DE TRAITEMENT DE PUITS, NOTAMMENT DES PRODUITS DE LAVAGE DE PUITS, CONTENANT DES ALPHA-OLEFINES LINEAIRES

(30) Priorität: 13.06.1994 DE 4420455
(43) Veröffentlichungstag der Anmeldung: 02.04.1997
(73) Patentinhaber: Henkel Kommanditgesellschaft auf Aktien, 40191 Düsseldorf (DE)
(72) Erfinder: MÜLLER, Heinz, D-40789 Monheim (DE); HEROLD, Claus-Peter, D-40822 Mettmann (DE); FIES, Matthias, D-47800 Krefeld (DE); VON TAPAVICZA, Stefan, D-40699 Mettmann (DE)
(86) Internationale Anmeldenummer: EP9502143
(87) Internationale Veröffentlichungsnummer: WO9534610

(56) Entgegenhaltungen:
- EP-A- 0 386 636
- EP-A- 0 386 638
- EP-A- 0 391 251
- EP-A- 0 391 252
- EP-A- 0 627 481
- WO-A-95/06695
- WO-A-95/21226

## Beschreibung

Die Erfindung beschreibt neue, unter Normalbedingungen fließfähige Bohrlochbehandlungsmittel, die unter Mitverwendung einer Ölphase zusammengesetzt sind. Als charakteristisches Beispiel für Behandlungsmittel dieser Art wird im nachfolgenden die Erfindung anhand von Bohrspülflüssigkeiten und darauf aufgebauten Bohrspülschlämmen beschrieben, die sowohl bei landgestützten als auch bei seegestützten Bohrungen Verwendung finden können. Das Anwendungsgebiet der erfindungsgemäßen Abwandlung von Hilfsflüssigkeiten der hier betroffen Art ist jedoch nicht darauf beschränkt. In Betracht kommen die zahlreichen weiteren Hilfsflüssigkeiten des hier angesprochenen Sachgebiets. Als Beispiele seien benannt Spotting Fluids, Spacer, Packer Fluids, Hilfsflüssigkeiten für Workover und Stimulierung und für das Fracturing.

Betroffen sind durch die Erfindung dabei sowohl Hilfsflüssigkeiten der genannten Art, die ölbasiert sind, d.h. mit einer geschlossenen Ölphase arbeiten, als auch Hilfsmittel, in denen die Ölphase in einer insbesondere wäßrigen geschlossenen Phase emulgiert ist. Bohrspülflüssigkeiten bzw. darauf aufgebaute Bohrspülschlämme sind hier charakteristische Beispiele der unterschiedlichen Möglichkeiten.

Bekannt sind einerseits wasserbasierte Bohrspülungen mit einem Gehalt an etwa 1 bis 50% emulgierter Ölphase - neben den anderen üblichen Hilfsstoffen einer solchen Bohrspülung - die auch als O/W-Emulsionsspülungen bezeichnet werden. Auf der anderen Seite sind in breitem Umfang ölbasierte Spülungssysteme im praktischen Einsatz, bei denen das Öl die fließfähige Phase oder doch wenigstens einen substantiellen Anteil der fließfähigen Phase als geschlossene Ölphase bildet. Besondere Bedeutung haben hier die sogenannten Invert-Bohrspülschlämme, die auf der Basis W/O-Emulsionen eine disperse wäßrige Phase in der geschlossenen Ölphase enthalten. Der Gehalt an disperser wäßriger Phase liegt üblicherweise im Bereich von wenigstens etwa 5 bis 10 Gew.-% bis zu etwa 50 bis 60 Gew.-%. Neben diesen W/O-Invert-Bohrspülschlämmen sind aber auch die sogenannten true-oil-Muds bekannt, deren Flüssigphase nahezu ausschließlich aus einer geschlossenen Ölphase gebildet ist, die allenfalls geringe Mengen - üblicherweise nicht mehr als etwa 5 bis 10 Gew.-% - an wäßriger Phase dispergiert enthalten.

Die Erfindung betrifft in gleicher Weise die hier dargestellten Gebiete der ölbasierten Spülungssysteme wie die wasserbasierten Spülungssysteme auf Emulsionsbasis.

Der Einsatz der neuen fließfähigen Bohrlochbehandlungsmittel hat besondere Bedeutung für die Erschließung von Erdöl und Erdgas, insbesondere im marinen Bereich, ist aber nicht darauf eingeschränkt. Die neuen Systeme können allgemein Verwendung auch bei landgestützten Bohrungen finden, beispielsweise beim Geothermiebohren, beim Wasserbohren, bei der Durchführung geowissenschaftlicher Bohrungen, beim sogenannten river-crossing und bei Bohrungen im Bergbaubereich. Unbeschadet dieser breiten Anwendbarkeit der erfindungsgemäßen Prinzipien wird nachfolgend die technische Lehre anhand der Bohrspülschlämme geschildert.

### Zum Stand der Technik

Flüssige Spülsysteme zur Niederbringung von Gesteinsbohrungen unter Aufbringen des abgelösten Bohrkleins sind bekanntlich beschränkt eingedickte fließfähige Systeme, die einer der nachfolgenden Klassen zugeordnet werden können:
rein wäßrige Bohrspülflüssigkeiten,
Bohrspülsysteme auf Ölbasis (true-oil-Muds und die sogenannten W/O-Invert-Emulsionsschlämme) sowie die
wasserbasierten O/W-Emulsionen, die in der geschlossenen wäßrigen Phase eine heterogene fein-disperse Ölphase enthalten.

Bohrspülungen auf geschlossener Ölbasis und hier insbesondere die W/O-Invert-Emulsionen sind im allgemeinen als Dreiphasensystem aufgebaut:
Öl, Wasser und feinteilige Feststoffe. Die wäßrige Phase ist dabei heterogen fein-dispers in der geschlossenen Ölphase verteilt. Es ist eine Mehrzahl von Zusatzstoffen vorgesehen, insbesondere Emulgatoren, Beschwerungsmittel, fluid-loss-Additive, Alkalireserven, Viskositätsregler und dergleichen. Zu Einzelheiten wird beispielsweise verwiesen auf die Veröffentlichung P.A. Boyd et al. "New Base Oil Used in Low-Toxicity Oil Muds" Journal of Petroleum Technology, 1985, 137 bis 142 sowie R.B. Bennett "New Drilling Fluid Technology - Mineral Oil Mud" Journal of Petroleum Technology, 1984, 975 bis 981 sowie die darin zitierte Literatur.

Bohrspülflüssigkeiten auf Basis wasserbasierter O/W-Emulsionssysteme nehmen in ihren Gebrauchseigenschaften eine Zwischenstellung ein zwischen den rein wäßrigen Systemen und den ölbasierten Invertspülungen. Ausführliche Sachinformationen finden sich hier in der einschlägigen Fachliteratur, verwiesen sei beispielsweise auf das Fachbuch George R. Gray und H.C.H. Darley, "Composition and Properties of Oil Well Drilling Fluids", 4. Auflage, 1980/81, Gulf Publishing Company, Houston und die umfangreiche darin zitierte Sach- und Patentliteratur sowie das Handbuch "Applied Drilling Engineering", Adam T. Borgoyne, Jr. et al., First Printing Society of Petroleum Engineers, Richardson, Texas (USA).

Die Ölphasen von Bohrspülungen der hier geschilderten Art und vergleichsweise aufgebauten anderen Bohrlochbehandlungsmitteln wurden bis in die jüngste Zeit in der Praxis nahezu ausschließlich durch ausgewählte Mineralölfraktionen gebildet. Damit ist eine nicht unbeträchtliche Belastung der Umwelt verbunden, wenn beispielsweise die Bohrschlämme unmittelbar oder über das erbohrte Gestein in die Umwelt gelangen. Mineralöle sind zwar aerob in Gegenwart geeigneter Bakterienstämme abbaubar, dieser Abbauprozeß verläuft jedoch vergleichsweise langsam. Anaerob sind Mineralöle praktisch nicht abbaubar und damit als langfristige Verschmutzung anzusehen.

Diese Problematik ist seit Jahren der Fachwelt bekannt. So beschreiben die US-Patentschriften 4,374,737 und 4,481,121 ölbasierte Invert-Bohrspülflüssigkeiten, in denen sogenannte nonpolluting oils Verwendung finden sollen. Als nonpolluting oils werden nebeneinander und gleichwertig aromatenfreie Mineralölfraktionen sowie Esteröle pflanzlichen und tierischen Ursprungs benannt. Bei diesen Esterölen handelt es sich um Triglyceride natürlicher Fettsäuren, die bekanntlich eine hohe Umweltverträglichkeit besitzen und gegenüber Kohlenwasserstofffraktionen aus ökologischen Überlegungen deutliche Überlegenheit besitzen. Die praktische Verwirklichung dieser Vorschläge für das besonders wichtige Gebiet der ölbasierten W/O-Invert-Emulsionsspülungen ist unmöglich. Die im praktischen Gebrauch anfallenden primären und sekundären Hydrolyseprodukte dieser Triglyceridester führen zu unkontrollierbaren Veränderungen der Fließfähigkeit der W/O-Emulsionen. Insbesondere tritt in kürzester Frist eine vollständige Verdickung ein.

Die Anmelderin beschreibt in einer größeren Zahl älterer Anmeldungen Vorschläge zum Austausch der Mineralölfraktionen gegen ökologisch verträgliche, vergleichsweise leicht abbaubare Ölphasen. Dabei werden vier unterschiedliche Typen von Austauschölen dargestellt, die auch in Mischung miteinander eingesetzt werden können. Es handelt sich hierbei um ausgewählte oleophile Carbonsäureester, um wenigstens weitgehend wasserunlösliche und unter Arbeitsbedingungen fließfähige Alkohole, um entsprechende Ether und um ausgewählte Kohlensäureester. Summarisch wird hier verwiesen auf die folgenden deutschen Patentanmeldungen, die in Form der DE-Al-Dokumente druckschriftlicher Stand der Technik geworden sind: 38 42 659; 38 42 703; 39 07 391; 39 07 392; 39 03 785; 39 03 784; 39 11 238; 39 11 299; 40 18 228 und 40 19 266. Beschrieben ist in den hier genannten Druckschriften insbesondere das Gebiet ölbasierter Bohrspülsysteme, insbesondere vom W/O-Invert-Typ. Wasserbasierte Emulsionsspülungen unter Verwendung von Ölphasen erhöhter Abbaubarkeit werden beschrieben in den nachfolgenden deutschen Schutzrechtsanmeldungen, wobei auch hier die Veröffentlichungsnummern der DE-Al-Dokumente angegeben sind: 39 15 876; 39 15 875; 39 16 550 und den bereits genannten 40 18 228 und 40 19 266.

Auch von anderer Seite sind Vorschläge gemacht worden, Mineralöle in Bohrlochbehandlungsmitteln der hier beschriebenen Art durch andere Ölphasen zu ersetzen, verwiesen sei im Zusammenhang mit der Erfindungsbeschreibung hier lediglich auf die US 5,189,012. Vorgeschlagen wird hier der Einsatz von synthetischen Kohlenwasserstoffverbindungen aus der Gruppe der verzweigkettigen Oligomeren, die durch Oligomerisierung von Olefinen mit 2 bis 14 C-Atomen auf mittlere Molgewichte des Oligomeren im Bereich von 120 bis 1.000 hergestellt worden sind. Die Beispiele dieser Druckschrift beschreiben Untersuchungen zur Toxizität dieser verzweigten Kohlenwasserstoffoligomeren gegenüber ausgewählten Testorganismen (Mysidopsis Bahia). Untersuchungen zur Abbaubarkeit und insbesondere zur anaeroben Abbaubarkeit dieser verzweigten Kohlenwasserstoffverbindungen, die in der Fachwelt auch als "Poly-alpha-Olefine" bekannt sind, finden sich nicht. Untersuchungen der Anmelderin zu diesem Problemkreis haben gezeigt, daß die anaerobe Abbaubarkeit dieser Polyalpha-Olefine nicht oder praktisch nicht gegeben ist.

Demgegenüber zeichnen sich Ölphasen auf Basis der in den zuvor genannten Druckschriften beschriebenen Esteröle und entsprechender oleophiler Alkohole durch eine überraschend gute Abbaubarkeit sowohl unter aeroben als auch insbesondere unter anaeroben Bedingungen aus. Von dieser Tatsache ausgehend haben in der heutigen Praxis ausgewählte Monocarbonsäureester weltweiten Einsatz als Austauschöle, insbesondere für Bohrschlämme, auf dem Gebiet der seegestützten Bohrungen Verwendung gefunden. Zum gegenwärtigen Zeitpunkt kommen dabei besondere Bedeutung den Estern gesättigter Monocarbonsäuren mit 12 bis 16 C-Atomen und monofunktionellen Alkoholen zu, wie sie in der DE-A1 38 41 703 beschrieben sind.

### Die Aufgabe der Erfindung und ihre technische Lösung

Die Erfindung will den Bereich technischer Möglichkeiten erweitern, der mit dem heutigen Wissensstand für alternative Ölphasen auf dem hier betroffenen Einsatzgebiet gegeben ist. Insbesondere geht die Erfindung dabei von der Aufgabe aus, die thermische Belastbarkeit solcher flüssigen und insbesondere Wasser enthaltenden Bohrlochbehandlungsmittel zu vergrößern, ohne damit die Abbaubarkeit - und dabei sowohl die aerobe als auch gerade die anaerobe Abbaubarkeit - zu gefährden. Hier liegen die folgenden Erkenntnisse zugrunde:

Die heute im großtechnischen Einsatz befindlichen alternativen Ölphasen auf Basis Carbonsäureester verbinden im Bereich üblicher Einsatzbedingungen optimierte Ergebnisse sowohl auf der Seite der technischen Funktionsfähigkeit wie der ökologischen Verträglichkeit, dargestellt an der anaeroben Abbaubarkeit. Trotz der im Prinzip bestehenden Hydrolysegefährdung sind auch Wasser enthaltende Systeme dieser Art - insbesondere die W/O-Invertsysteme - bis zu verhältnismäßig hohen Temperaturen im Bereich der Bohrlochsohle erstaunlich stabil. Werden jedoch extreme Temperaturwerte beispielsweise im Bereich von 200°C und darüber erreicht, kann eine verstärkte Esterhydrolyse auftreten und das Verfahren belasten.

Oleophile Alkohole sind nicht hydrolysegefährdet und verbinden diesen Vorteil mit guter aerober und anaerober Abbaubarkeit. Vermutlich aufgrund der Tendenz zur Ausbildung von Wasserstoffbrücken zeigen aber alkoholbasierte W/O-Spülungen Fließeigenschaften, die im praktischen Betrieb gegebenenfalls besondere Aufmerksamkeit erfordern, so daß sich bis heute der praktische Einsatz solcher hydrolyseresistenter Ölphasen auf Basis der oleophilen Alkohole nicht durchgesetzt hat.

Die erfindungsgemäße Lehre geht von der Aufgabe aus, ausgewählte Kohlenwasserstoffverbindungen im hier angesprochenen Arbeitsgebiet als Ölphase oder insbesondere als Mischungskomponente der Ölphase einzusetzen. Die ausgewählten Kohlenwasserstoffverbindungen sollen dabei aufgrund ihrer Struktur möglichst weitgehend der angestrebten Kombination von technischen Gebrauchseigenschaften und ökologischer Verträglichkeit, insbesondere im Sinne auch einer anaeroben Abbaubarkeit gerecht werden. Die erfindungsgemäße Lehre geht dabei von der zusätzlichen Konzeption aus, bewußt gewisse Mängel in der technischen Gebrauchsfähigkeit in Kauf nehmen zu können. Durch Abmischung der reinen Kohlenwasserstoffverbindungen mit alternativen Ölphasen der zuvor genannten Art und insbesondere mit Ölen auf Esterbasis und/oder auf Basis oleophiler Alkohole können gewisse Schwächen aufgefangen und ausgeglichen werden. Der erfindungsgemäßen Lehre liegt dabei insbesondere die Erkenntnis zugrunde, daß gerade solche Stoffabmischungen geeignet sind, zu einer Summierung optimierter technischer Gebrauchseigenschaften zu kommen, ohne dabei den Vorteil der ökologischen Verträglichkeit im Sinne aerober und/oder anaerober Abbaubarkeit aufgeben zu müssen.

Die im nachfolgenden geschilderte Lehre der Erfindung geht von der Tatsache aus, daß wenigstens überwiegend lineare und alpha-ständig olefinisch ungesättigte Kohlenwasserstoffverbindungen - im nachfolgenden auch als "lineare alpha-Olefine-LAO" bezeichnet - auch anaerob unter Einsatz von in der Praxis am Meeresboden auftretenden Mikroorganismenstämmen abgebaut werden können. Verwiesen wird in diesem Zusammenhang auf die Veröffentlichung B. Schink "Degradation of unsaturated hydrocarbons by methanogenic enrichment cultures" in FEMS Microbiology Ecology 31 (1985), 69 bis 77, Published by Elsevier. Gezeigt wird hier, daß alpha-Olefine einer für den erfindungsgemäßen Einsatzzweck interessanten Kettenlänge - beispielsweise alpha-Hexadecen - unter Einsatz anoxischer Meeressedimente als Impfmedium auch unter anaeroben Bedingungen abgebaut werden können.

Gegenstand der Erfindung ist dementsprechend in einer ersten Ausführungsform die Verwendung von im Temperaturbereich von 0 bis 20 °C fließ- und pumpfähigen Lösungen von linearen alpha-Olefinen LAO mit Flammpunkten von wenigstens 80 °C in Abmischung mit sowohl aerob als auch anaerob abbaubaren, wasserunlöslichen Ölen, dadurch gekennzeichnet, daß die wasserunlöslichen Öle aus den Klassen oleophiler Alkohole, Ether, Kohlensäureester und/oder Esterölen von Monocarbonsäuren aus einer der nachfolgenden Unterklassen
a) Ester aus C₁₋₅-Monocarbonsäuren und 1- und/oder mehrfunktionellen Alkoholen, wobei Reste aus 1-wertigen Alkoholen wenigstens 6 C-Atome aufweisen und die mehrwertigen Alkohole 2 bis 6 C-Atome im Molekül besitzen,
b) Ester aus aliphatisch gesättigten Monocarbonsäuren synthetischen und/oder natürlichen Ursprungs mit 6 bis 16 C-Atomen und 1- und/oder mehrfunktionellen Alkoholen der unter a) genannten Art,
c) Ester olefinisch 1- und/oder mehrfach ungesättigter Monocarbonsäuren mit bis 24 C-Atomen und monofunktionellen geradkettigen und/oder verzweigten Alkoholen
ausgewählt sind, als geschlossene oder disperse Ölphase von öl- bzw. wasserbasierten Bohrspülungen oder anderen Bohrlochbehandlungsmitteln, die im Falle der ölbasierten Behandlungsmittel auch als W/O-Emulsion mit einer dispersen wäßrigen Phase vorliegen können.

Im Falle der ölbasierten Behandlungsmittel sind besonders die zuvor geschilderten W/O-Invertemulsionen von praktischer Bedeutung, die in der geschlossenen Ölphase im Sinne der erfindungsgemäßen Definition eine disperse wäßrige Phase enthalten.

In einer besonders wichtigen Ausführungsform betrifft die Erfindung im Temperaturbereich von 5 bis 20°C fließ- und pumpfähige Bohrlochbehandlungsmittel, insbesondere Bohrspülungen, entweder auf Basis einer geschlossenen Ölphase, gewünschtenfalls in Abmischung mit einer beschränkten Menge einer dispersen wäBrigen Phase (W/O-Invert-Typ) oder auf Basis einer O/W-Emulsion mit disperser Ölphase in der geschlossenen wäßrigen Phase,
wobei diese Mittel gewünschtenfalls gelöste und/oder dispergierte übliche Hilfsstoffe wie Viskositätsbildner, Emulgatoren, fluid-loss-Additive, Netzmittel, feinteilige Beschwerungsstoffe, Salze, Alkalireserven und/oder Biocide enthalten. Diese erfindungsgemäßen Bohrlochbehandlungsmittel kennzeichnen sich dadurch, daß sie in ihrer Ölphase wenigstens überwiegend lineare und alpha-ständig olefinisch ungesättigte Kohlenwasserstoffverbindungen (LAO) mit Flammpunkten von wenigstens 80°C und vorzugsweise von wenigstens 90°C enthalten.

### Die Ausgestaltung der Erfindung in ihren Einzelheiten und bevorzugten Ausführungsformen

Wenigstens überwiegend geradkettige alpha-Olefine sind für die verschiedensten Einsatzzwecke bekannte Handelsprodukte, vgl. hierzu beispielsweise das Kapitel "LINEAR ALPHA-OLEFINS" des Chemical Economics Handbook-SRI International (1993). Sie können naturstoffbasiert sein, werden aber insbesondere in großem Umfange auch synthetisch gewonnen. Naturstoffbasierte LAO werden durch Dehydratisierung naturstoffbasierter Fettalkohole als lineare Produkte mit geradkettiger Kohlenstoffzahl gewonnen. Auch die auf synthetischem Wege gewonnenen LAO - hergestellt durch Oligomerisation von Ethylen - enthalten häufig geradkettige Kohlenstoffzahlen in der Kette, es sind heute aber auch Verfahren zur Herstellung von ungeradzahligen alpha-Olefinen bekannt. Im einzelnen kann auf die zitierte Veröffentlichung in Chemical Economics Handbook verwiesen werden.

Für den erfindungsgemäßen Einsatz kann geradzahligen LAO eine bevorzugte Bedeutung zukommen, wenn auch die erfindungsgemäße Lehre darauf nicht eingeschränkt ist. LAO im Sinne der erfindungsgemäßen Definition weisen - aufgrund ihrer Flüchtigkeit - in der Regel wenigstens 10, vorzugsweise wenigstens 12 bis 14 C-Atome im Molekül auf. Die Obergrenze der bei Raumtemperatur fließfähigen LAO liegt im Bereich von C₁₈₋₂₀. Diese Obergrenze ist aber für die Verwertbarkeit dieser Stoffklasse im Rahmen der Erfindung nicht einschränkend. Verständlich ist das aus der erfindungsgemäß bevorzugten Variante, die LAO in Abmischung mit anderen, insbesondere ökologisch verträglichen Ölphasen einsetzt. Gerade in solchen Stoffabmischungen können vergleichsweise geringe LAO-Mengen wichtige Effekte für die Stoffeigenschaften der Ölmischphase haben. Die Obergrenze geeigneter LAO-Verbindungen für den Einsatz im Rahmen der erfindungsgemäßen Lehre liegt also deutlich über dem zuvor genannten Grenzwert von C₁₈₋₂₀ und kann beispielsweise C₃₀ erreichen. Für das Gebiet ölbasierter Bohrlochbehandlungsmittel und insbesondere für das Gebiet der W/O-Invert-Bohrspülungen wird allerdings in der Regel dem Kettenlängenbereich von 12 bis 24 und insbesondere von 14 bis 20 C-Atomen besondere Bedeutung zukommen.

Wie bereits angegeben treten die Eigenschaften zur Eigenrheologie der LAO dann in den Hintergrund, wenn Abmischungen dieser Komponenten mit anderen Ölphasen aus dem Bereich der Bohrlochbehandlungsmittel zum Einsatz kommen. Hier gilt, daß Mischungsverhältnisse von vergleichsweise geringen oder wenigstens untergeordneten Mengen an LAO in Abmischung mit einer oder mehreren anderen Ölkomponenten in Betracht kommen. Ebenso kann es aber auch - in Anpassung an die jeweiligen Anforderungen der betroffenen Bohrung - sinnvoll sein, den wenigstens überwiegenden Anteil der fließfähigen Ölphase durch die LAO-Komponente(n) auszubilden. Grundsätzlich gilt, daß der LAO-Gehalt in der Ölphase im Bereich von wenigstens 2 bis 5 Gew.-% bis zu 95 bis 98 Gew.-% betragen kann, wobei in bevorzugten Ausführungsformen der LAO-Gehalt wenigstens 20 bis weniger als 50 Gew.-% und insbesondere wenigstens etwa 50 Gew.-% beträgt. Bevorzugte obere Grenzwerte für die LAO-Anteile in der Ölphase liegen bei 90 bis 95 Gew.-% und insbesondere bei 70 bis 75 Gew.-%. Alle diese Zahlenwerte gelten für die geschilderte Ausführungsform, in der die LAO in Abmischung mit anderen Ölphasen zum Einsatz kommen. Zu deren Identifizierung wird auf die eingangs genannten Druckschriften der Anmelderin zum Einsatz von Estern, Ethern und Alkoholen als Ölphasen in Bohrlochbehandlungsmitteln verwiesen. Die Offenbarung dieser auf die Anmelderin zurückgehenden Druckschriften wird hiermit ausdrücklich auch zum Gegenstand der vorliegenden Erfindungsoffenbarung gemacht.

Erfindungsgemäß werden bevorzugt LAO-enthaltende Ölphasen eingesetzt, die in ihren rheologischen Eigenschaften auf die jeweilige Anwendungsform zugeschnitten sind. So werden beim Einsatz als geschlossene Ölphase entsprechende Öle bzw. Ölgemische eingesetzt, deren Erstarrungswerte (Fließ- und Stockpunkt) vorzugsweise unterhalb 0°C und insbesondere unterhalb -5°C liegen und die dabei weiterhin im Temperaturbereich von 0 bis 5°C bevorzugt eine Brookfield(RVT)-Viskosität nicht über 55 mPas und vorzugsweise nicht über 45 mPas besitzen. Im Falle der O/W-Emulsionsspülungen bzw. -Behandlungsmittel kann die Ölphase - die hier ja jetzt als disperse Phase vorliegt - in ihren rheologischen Eigenschaften sehr viel breiter definiert werden. Geeignet sind hier insbesondere Öle einer Brookfield(RVT)-Viskosität bis etwa 3 Mio mPas und vorzugsweise bis etwa 1 Mio mPas.

Beim Einsatz von Abmischungen der LAO mit weiteren löslichen Ölphasen werden bevorzugt solche Mischungskomponenten ausgewählt, daß die Flammpunkte auch der Ölmischphasen bei wenigstens 80°C, vorzugsweise bei wenigstens etwa 90°C und insbesondere oberhalb 100°C liegen. Aus Sicherheitsgründen sind höhere Flammpunkte der Ölmischphasen bevorzugt, so können in der Regel Werte oberhalb 135°C eingestellt werden.

Die chemische Natur und bevorzugte Auswahlelemente zum jeweils gewählten Typ der zusammen mit den LAO einzusetzenden anderen Ölphasen geht aus den eingangs zitierten Druckschriften der Anmelderin zum jeweiligen Öltyp hervor. In Betracht kommen hier wie angegeben insbesondere die Klassen der Monocarbonsäureester, der Polycarbonsäureester, der Kohlensäureester, der oleophilen Alkohole und der entsprechenden Ether. Die zuerst aufgezählten Klassen der Esterverbindungen können im praktischen Einsatz durch partielle Hydrolyse insbesondere flüchtige Alkoholkomponenten ausbilden. Dementsprechend ist der Einsatz solcher Mischungskomponenten bevorzugt, die auch bei partieller Verseifung im praktischen Einsatz keine toxikologischen, insbesondere keine inhalationstoxikologischen Gefährdungen auslösen. Für die angesprochenen Klassen von Esterverbindungen bedeutet das insbesondere, daß monofunktionelle Alkohole dieser Ester natürlichen und/oder synthetischen Ursprungs vorzugsweise wenigstens 6 C-Atome und insbesondere wenigstens 8 C-Atome enthalten sollten.

Carbonsäureester polyfunktioneller Alkohole sind bekanntlich bezüglich inhalationstoxikologischer Gefährdungen unbedenklich. Insbesondere gilt das für entsprechende Ester natürlichen Ursprungs, wie sie als Fette und/oder Öle pflanzlichen und/oder tierischen Ursprungs in zahlreichen Ausgestaltungen zur Verfügung stehen und sich - unter Berücksichtigung der weiterführenden im Zusammenhang mit der Erfindungsoffenbarung definierten Parameter - auch für den erfindungsgemäßen Einsatzzweck eignen.

Zur Vervollständigung der Erfindungsoffenbarung wird nachfolgend noch einmal eine kurze Zusammenfassung geeigneter Mischungskomponenten gegeben.

Bevorzugte Esteröle von Monocarbonsäuren zählen zu wenigstens einer der nachfolgenden Unterklassen:
a) Ester von C₁₋₅-Monocarbonsäuren und 1- und/oder mehrfunktionellen Alkoholen, wobei Reste aus 1-wertigen Alkoholen wenigstens 6, bevorzugt wenigstens 8 C-Atome aufweisen und die mehrwertigen Alkohole bevorzugt 2 bis 6 C-Atome im Molekül besitzen,
b) Ester aus Monocarbonsäuren synthetischen und/oder natürlichen Ursprungs, mit 6 bis 16 C-Atomen, insbesondere Ester entsprechender aliphatisch gesättigter Monocarbonsäuren, und 1-und/oder mehrfunktionellen Alkoholen der unter a) genannten Art, wobei entsprechende Ester von Monocarbonsäuren mit 12 bis 16 C-Atomen auch frei von Resten mehrwertiger Alkohole sein können,
c) Ester olefinisch 1- und/oder mehrfach ungesättigter Monocarbonsäuren mit wenigstens 16, insbesondere 16 bis 24 C-Atomen und insbesondere monofunktionellen geradkettigen und/oder verzweigten Alkoholen. Insbesondere in Betracht kommen hier aber auch entsprechende Ester mehrfunktioneller Alkohole der unter a) genannten Art, wobei entsprechenden Estern des Glycerins besondere Bedeutung zukommen kann. Charakteristische Beispiele hierfür sind Glyceridöle pflanzlichen und/oder tierischen Ursprungs, die in Abmischung mit der LAO-Komponente selbst in der Ausführungsform der eine disperse wäßrige Phase enthaltenden W/O-Invertspülungen in technologisch brauchbarer Form zum Einsatz gebracht werden können. Naturstoffe der hier betroffenen Art sind insbesondere auf dem Gebiet tierischer Öle allerdings bekanntlich nicht auf das Glycerin als esterbildende Alkoholkomponente eingeschränkt. Entsprechend liegt auch hier keine Einschränkung der erfindungsgemäßen Lehre vor.

Zur Definition geeigneter Polycarbonsäureester wird noch einmal auf die bereits genannte DE-A1 40 19 266 verwiesen. Besonders wichtige Mischungskomponenten im Sinne der erfindungsgemäßen Lehre können für die Abmischung mit den LAO Kohlensäurediester sein, wie sie in der DE-A1 40 18 228 beschrieben sind. Ester der Kohlensäure zeichnen sich unter Arbeitsbedingungen schon von vorneherein durch eine erhöhte Hydrolysebeständigkeit aus. Durch Abmischung mit LAO können auch hochtemperaturstabile Bohrlochbehandlungsmittel zugänglich werden, die im Temperaturbereich bis 300°C oder auch noch darüber verwendbar sind und gleichwohl die geforderte ökologische Verträglichkeit sicherstellen.

Wie bereits mehrfach angegeben, kann als Mischungskomponenten besondere Bedeutung oleophilen Alkoholen zukommen, wie sie in der DE-A1 39 11 238 bzw. der entsprechenden EP-A1 0 391 252 beschrieben sind. In Betracht kommen hier insbesondere wenigstens weitgehend wasserunlösliche und im Temperaturbereich von 0 bis 5°C fließ- und pumpfähige 1- und/oder mehrfunktionelle Alkohole natürlichen und/oder synthetischen Ursprungs bzw. deren Abmischungen in ökologisch verträglichen wasserunlöslichen Ölen.

Im Rahmen der zuvor geschilderten Ausführungsform der Mitverwendung von Polycarbonsäureestern kann der folgenden Modifikation besondere Bedeutung zukommen: Die Mitverwendung von hochviskosen Komplexestern mit ausgeprägtem Schmierstoffcharakter auf Basis von polyfunktionellen Carbonsäuren und polyfunktionellen Alkoholen sowie gegebenenfalls einkondensierten monofunktionellen Alkoholen und/oder Monocarbonsäuren kann dazu ausgenutzt werden, auch durch vergleichsweise kleine Mengen dieser mitverwendeten Komponenten - beispielsweise Mengen im Bereich von 2 bis 15 Gew.-% bezogen auf Gesamtölphase - substantielle Verbesserungen der Schmierfähigkeit der Ölphase einzustellen. Insbesondere die reinen Kohlenwasserstofföle im Sinne der LAO-Verbindungen zeigen ja in aller Regel unbefriedigende Schmierwirkung und werden hier von Esterölen deutlich übertroffen. Im Rahmen des hier geschilderten Beispiels wird aber darüberhinaus verständlich, daß der Einsatz von Mehrkomponentengemischen mit mehr als nur 2 Bestandteilen als Ölphase unter Berücksichtigung der erfindungsgemäßen Arbeitsregeln zu wichtigen technischen Optimierungen führen kann, ohne die ökologische Verträglichkeit insbesondere im Sinne des aeroben und des anaeroben Abbaus aufzugeben.

Sind die erfindungsgemäß beschriebenen Arbeitsmittel als Invert-Bohrspülungen vom W/O-Typ ausgebildet, dann liegen bevorzugte Gehalte ihrer dispersen wäßrigen Phase im Bereich von 5 bis 60 Gew.-% und insbesondere im Bereich von 10 bis 50 Gew.-% - bezogen jeweils auf die fließfähigen Anteile. 10 bis 45 Gew.-% disperser wäßriger Phase sind Werte für im breiten Bereich anwendbarer ölbasierter W/O-Invertspülungen.

Im Fall der wasserbasierten O/W-Emulsionsspülungen wird die Menge der dispersen Ölphase den jeweiligen technischen Anforderungen angepaßt. Im allgemeinen liegt der Ölgehalt im Bereich von 1 bis 50 Gew.-% und vorzugsweise im Bereich von 8 bis 50 Gew.-% - auch hier bezogen auf die flüssigen Komponenten der Spülung.

### Additive in der ölbasierten bzw. wasserbasierten Spülung

Es gelten hier die allgemeinen Gesetzmäßigkeiten für die Zusammensetzung der jeweiligen Behandlungsflüssigkeiten, für die im nachfolgenden anhand entsprechender Bohrspülschlämme beispielhafte Angaben gemacht werden.

Invert-Bohrspülschlämme enthalten üblicherweise zusammen mit der geschlossenen Ölphase die feindisperse wäßrige Phase in Mengen von 5 bis 45 Gew.-% und vorzugsweise in Mengen von 5 bis 25 Gew.-%.

Für die Rheologie bevorzugter Invert-Bohrspülungen im Sinne der Erfindung gelten die folgenden rheologischen Daten: Plastische Viskosität (PV) im Bereich von 10 bis 60 mPas, bevorzugt von 15 bis 40 mPas, Fließgrenze (YP) im Bereich von 2 bis 19 Pa (5 bis 40 lb/100 ft²) bevorzugt von 5 bis 12 Pa (10 bis 25 lb/100 ft²) - jeweils bestimmt bei 50°C. Für die Bestimmung dieser Parameter, für die dabei eingesetzten Meßmethoden sowie für die im übrigen übliche Zusammensetzung der hier beschriebenen Invert-Bohrspülungen gelten im einzelnen die Angaben des Standes der Technik, die eingangs zitiert wurden und ausführlich beispielsweise beschrieben sind in dem Handbuch "Manual Of Drilling Fluids Technology" der Firma NL-Baroid, London, GB, dort insbesondere unter Kapitel "Mud Testing - Tools and Techniques" sowie "Oil Mud Technology", das der interessierten Fachwelt frei zugänglich ist.

In Emulsionsspülungen liegt die disperse Ölphase üblicherweise in Mengen von wenigstens 1 bis 2 Gew.-%, häufig in Mengen von wenigstens etwa 5 Gew.-%, vorzugsweise in Mengen von wenigstens 7 bis 8 Gew.-% im Rahmen einer O/W-Emulsion vor. Der Ölanteil sollte hier vorzugsweise nicht mehr als etwa 50 Gew.-% und insbesondere nicht mehr als etwa 40 Gew.-% ausmachen - Gew.-% jeweils bezogen auf die Summe der unbeschwerten Flüssiganteile Öl/Wasser.

Neben dem Wassergehalt kommen für alle vergleichbare Spülungstypen vorgesehene Additive in Betracht, deren Zusatz in üblicher Weise mit einem ganz bestimmt angestrebten Eigenschaftsbild der Bohrspülung verbunden ist. Die Additive können wasserlöslich, öllöslich und/oder wasser- bzw. öldispergierbar sein.

Klassische Additive können sein: Emulgatoren, fluid-loss-Additive, Strukturviskosität aufbauende lösliche und/oder unlösliche Stoffe, Alkalireserven, Mittel zur Inhibierung des unerwünschten Wasseraustausches zwischen erbohrten Formationen - z.B. wasserquellbare Tone und/oder Salzschichten - und der z.B. wasserbasierten Spülflüssigkeit, Netzmittel zum besseren Aufziehen der emulgierten Ölphase auf Feststoffoberflächen, z.B. zur Verbesserung der Schmierwirkung, aber auch zur Verbesserung des oleophilen Verschlusses freigelegter Gesteinsformationen, bzw. Gesteinsflächen, Biocide, beispielsweise zur Hemmung des bakteriellen Befalls von O/W-Emulsionen und dergleichen. Im einzelnen ist hier auf den einschlägigen Stand der Technik zu verweisen, wie er beispielsweise in der eingangs zitierten Fachliteratur ausführlich beschrieben wird, siehe hierzu insbesondere Gray and Darley, a.a.0., Kapitel 11, "Drilling Fluid Components". Nur auszugsweise sei dementsprechend zitiert:

Feindisperse Zusatzstoffe zur Erhöhung der Spülungsdichte: Weit verbreitet ist das Bariumsulfat (Baryt), aber auch Calciumcarbonat (Calcit) oder das Mischcarbonat von Calcium und Magnesium (Dolomit) finden Verwendung.

Mittel zum Aufbau der Strukturviskosität, die gleichzeitig auch als fluid-loss-Additive wirken: In erster Linie ist hier Bentonit bzw. hydrophobierter Bentonit zu nennen. Für Salzwasserspülungen kommt anderen vergleichbaren Tonen, insbesondere Attapulgit und Sepiolith in der Praxis beträchtliche Bedeutung zu.

Auch der Mitverwendung organischer Polymerverbindungen natürlichen und/oder synthetischen Ursprungs kann beträchtliche Bedeutung in diesem Zusammenhang zukommen. Zu nennen sind hier insbesondere Stärke oder chemisch modifizierte Stärken, Cellulosederivate wie Carboxymethylcellulose, Guargum, Xanthangum oder auch rein synthetische wasserlösliche und/oder wasserdispergierbare Polymerverbindungen, insbesondere von der Art der hochmolekularen Polyacrylamidverbindungen mit oder ohne anionische bzw. kationische Modifikation. Als besonders geeignete Viskositätsbildner auf Basis organischer synthetischer Polymerverbindungen haben sich für Ölphasen auf LAO-Basis auch Polyalkylmethacrylate, beispielsweise die unter der geschützten Handelsbezeichnung "VISCOPLEX" vertriebenen Handelsprodukte der Firma Röhm GmbH erwiesen.

Verdünner zur Viskositätsregulierung: Die sogenannten Verdünner können organischer oder anorganischer Natur sein. Beispiele für organische Verdünner sind Tannine und/oder Qebracho-Extrakt. Weitere Beispiele hierfür sind Lignit und Lignitderivate, insbesondere Lignosulfonate. Wie zuvor allerdings angegeben wird in einer bevorzugten Ausführungsform der Erfindung auf die Mitverwendung toxischer Komponenten gerade hier verzichtet, wobei hier in erster Linie die entsprechenden Salze mit toxischen Schwermetallen wie Chrom und/oder Kupfer zu nennen sind. Ein Beispiel für anorganische Verdünner sind Polyphosphatverbindungen.

Emulgatoren: Hier kommt es entscheidend auf den Spülungstyp an. Für die Praxis brauchbare Emulgatoren zur Ausbildung von W/O-Emulsionen sind insbesondere ausgewählte oleophile Fettsäuresalze, beispielsweise solche auf Basis von Amidoaminverbindungen. Beispiele hierfür werden in der bereits zitierten US-PS 4,374,737 und der dort zitierten Literatur beschrieben.

Zur Herstellung von O/W-Emulsionen werden in an sich bekannter Weise andere Emulgatoren benötigt. Es hat sich allerdings gezeigt, daß eine stabile Dispergierung im Sinne einer O/W-Dispersion sehr viel leichter möglich sein kann, als die entsprechende Dispergierung von reinen Mineralölen, wie sie nach dem Stand der Technik eingesetzt werden. Hier liegt eine erste Erleichterung. Weiterhin ist zu berücksichtigen, daß bei der Mitverwendung von Esterölen durch eine Partialverseifung unter Mitwirkung geeigneter Alkalireserven beim Einsatz längerkettiger Carbonsäureester wirkungsvolle O/W-Emulgatoren nachgebildet werden und damit zur Stabilisierung des Systems beitragen.

Der unerwünschte Wasseraustausch mit beispielsweise Tonen kann durch inhibierende Zusatzstoffe reduziert werden: In Betracht kommen hier die aus dem Stand der Technik zu öl- und wasserbasierten Bohrspülungen bekannten Zusatzstoffe. Insbesondere handelt es sich dabei um Halogenide und/oder Carbonate der Alkali-und/oder Erdalkalimetalle, wobei entsprechenden Kaliumsalzen gegebenenfalls in Kombination mit Kalk, besondere Bedeutung zukommen kann.

Verwiesen sei beispielsweise auf die entsprechenden Veröffentlichungen in "Petroleum Engineer International", September 1987, 32 bis 40 und "World Oil", November 1983, 93 bis 97.

Alkalireserven: In Betracht kommen hier auf das Gesamtverhalten der Spülung abgestimmte anorganische und/oder organische Basen, insbesondere entsprechende basische Salze bzw. Hydroxide von Alkali-und/oder Erdalkalimetallen, sowie organische Basen. Art und Menge dieser basischen Komponenten sind dabei in bekannter Weise so gewählt und aufeinander abgestimmt, daß die Bohrlochbehandlungsmittel auf einen pH-Wert im Bereich von etwa neutral bis mäßig-basisch, insbesondere auf den Bereich von 7,5 bis 11 eingestellt sind.

Auf dem Gebiet der organischen Basen ist begrifflich zu unterscheiden zwischen wasserlöslichen organischen Basen - beispielsweise Verbindungen vom Typ des Diethanolamins - und praktisch wasserunlöslichen Basen ausgeprägt oleophilen Charakters wie sie in der eingangs zitierten Veröffentlichung der Anmelderin DE-A1 39 03 785 als Additiv in Invert-Bohrspülschlämmen auf Esterölbasis geschildert sind. Gerade die Mitverwendung auch solcher öllöslicher Basen im Rahmen der vorliegenden Erfindung fällt in die neue Lehre. Oleophile Basen dieser Art, die sich insbesondere durch wenigstens einen längeren Kohlenwasserstoffrest mit beispielsweise 8 bis 36 C-Atomen auszeichnen, sind dann allerdings nicht in der wäßrigen Phase sondern in der Ölphase gelöst. Hier kommt diesen basischen Komponenten mehrfache Bedeutung zu. Einerseits können sie unmittelbar als Alkalireserve wirken. Zum anderen verleihen sie dem dispergierten Öltröpfchen einen gewissen positiven Ladungszustand und führen damit zu erhöhter Interaktion mit negativen Flächenladungen, wie sie insbesondere bei hydrophilen und zum Ionenaustausch befähigten Tonen anzutreffen sind. Erfindungsgemäß kann damit Einfluß auf die hydrolytische Spaltung und den oleophilen Verschluß wasserreaktiver Gesteinsschichten genommen werden.

Die Menge der jeweils eingesetzten Hilfs- und Zusatzstoffe bewegt sich grundsätzlich im üblichen Rahmen und kann damit der zitierten einschlägigen Literatur entnommen werden.

### Beispiele

In den nachfolgenden Beispielen 1-4 und dem dazugehörigen Vergleichsbeispiel werden unter Einhaltung einer vergleichsweise wasserreichen Standardrezeptur für ölbasierte Bohrspülsysteme vom W/O-Typ in an sich bekannter Weise entsprechende Abmischungen zusammengestellt, wobei in den Beispielen 1-4 die geschlossene Ölphase der erfindungsgemäßen Definition entspricht. Im Vergleichsbeispiel wird als geschlossene Ölphase das Handelsprodukt "PETROFREE (^{R})" verwendet. Diese heute im großtechnischen Einsatz befindliche Ölphase ist bekanntlich sowohl aerob als auch anaerob gut abbaubar und basiert zum überwiegenden Teil auf gesättigten C₁₂₋₁₄-Monocarbonsäureestem.

Jeweils am ungealterten und am gealterten Material werden die Viskositätskennwerte wie folgt bestimmt:

Messung der Viskosität bei 50 °C in einem Fann-35-Viskosimeter (SR12) der Fa. Baroid Drilling Fluids, Inc.. Es werden in an sich bekannter Weise bestimmt die Plastische Viskosität (PV), die Fließgrenze (YE) sowie die Gelstärke (in Pa) nach 10 sec und 10 min.

Die Alterung der jeweiligen Bohrspülung wird durch Behandlung für den Zeitraum von 16 h bei 200 °C im sogenannten Roller-Oven vorgenommen.

Die untersuchten Bohrspülsysteme werden dabei in allen Beispielen gemäß der folgenden Grundrezeptur in an sich bekannter Weise zusammengestellt:
193 ml geschlossene Ölphase
8 g W/O-Emulgator (EZ-Mul der Fa. Baroid Drilling Fluids, Inc.)
3 g Viskosifier (Rilanit spezial der Fa. Henkel KGaA)
2 g Lime (Calciumhydroxid)
82 ml Wasser
30 g CaCl₂ x 2H₂O
2 g organophiler Bentonit (GELTONE der Fa. Baroid Drilling Fluids, Inc.)
211 g Baryt (Bariumsulfat)

### Beispiele 1 bis 4

Als lineares alpha-Olefin (LAO) wird in den erfindungsgemäßen Beispielen 1-4 ein entsprechendes C-18 LAO (Handelsprodukt Shop C-18 der Fa. Shell) eingesetzt. Die Zusammensetzung der Ölphasen aus den Beispielen 1-4 und dem Vergleichsbeispiel geht dabei aus der nachfolgenden Tabelle 1 hervor.

**Tabelle 1**

| Beispiel | 1 | 2 | 3 | 4 | Vergleichsbeispiel |
|---|---|---|---|---|---|
| C-18 LAO ml | 193 | 145 | 96,5 | 96,5 | |
| Guerbet C16-Alkohol ml | | 48 | | | |
| Di-n-Octylether ml | | | 96,5 | | |
| PETROFREE ml | | | | 96,5 | 193 |

Die nachfolgende Tabelle 2 faßt die bei 50 °C bestimmten Spülungsdaten für diese Beispiele 1-4 und das Vergleichsbeispiel zusammen. Angegeben sind dabei die Zahlenwerte für die Plastische Viskosität (PV), die Fließgrenze (YP) und die Gelstärke nach 10 sec (10") und 10 min (10'). Die Angaben in [] geben die in lb/100 ft² gemessenen Original-Werte wieder.

**Tabelle 2**

| Beispiele | 1 | 2 | 3 | 4 | Vergleichsbeispiel |
|---|---|---|---|---|---|
| PV (mPas) | 28 | 62 | 29 | 44 | 47 |
| YP (Pa) | 12 [26] | 67 [139] | 13 [28] | 23 [47] | 44 [91] |
| 10"/10' Gelstärke (Pa) | 5/6 | 35/36 | 7/8 | 10/12 | 19/20 |
| | [11/13] | [73/74] | [14/17] | [20/25] | [39/41] |

Die gleichen Spülungsdaten, jetzt jedoch nach Alterung für 16 h bei 200 °C im Roller-Oven, sind in der nachfolgenden Tabelle 3 zusammengefaßt.

**Tabelle 3**

| Beispiele | 1 | 2 | 3 | 4 | Vergleichsbeispiel |
|---|---|---|---|---|---|
| PV (mPas) | 21 | 38 | 18 | 59 | Nicht bestimmbar |
| YP (Pa) | 3 [7] | 11 [23] | 3 [6] | 26 [55] | Nicht bestimmbar |
| 10"/10' Gelstärke (Pa) | 3/3 | 1/4 | 2/3 | 11/12 | 27/36 |
| | [6/7] | [3/9] | [4/6] | [22/25] | [57/75] |

Der Vergleich der Zahlenwerte aus den Tabellen 2 und 3 zeigt, daß insbesondere die Abmischungen des C-18 LAO mit anderen ökologisch verträglichen Ölphasen zu für das praktische Arbeiten interessanten Ergebnissen führen.

Die unter Hochtemperaturbedingungen gealterte Invert-Spülung auf Basis des reinen Esteröles PETROFREE ist unter den hier gewählten Arbeitsbedingungen der sehr wasserreichen Invert-Spülung doch so stark durch eine in situ auftretende Ester- hydrolyse geschädigt, daß die zahlenmäßigen Bestimmungen der Plastischen Viskosität und der Fließgrenze nicht mehr möglich sind (Vergleichsbeispiel). Die Abmischung dieser Esterölphase mit dem C-18 Olefin im Verhältnis 1:1 führt zu einer so weitgehenden Stabilisierung, daß auch nach der 16stündigen Alterung bei 200 °C rheologische Daten im noch akzeptablen Bereich meßbar sind.

Die Beimischung von vergleichsweise geringen Mengen des C 16-Guerbet Alkohols zum C-18 LAO führt zwar im Frischzustand zu einer beträchtlichen Verdickung der W/O-Invert-Spülung, immerhin sind die Werte gut bestimmbar. Die Alterung des entsprechenden Ansatzes (Beispiel 2) im Hochtemperaturbereich führt dann aber zu sehr guten rheologischen Werten, die sich im praktischen Einsatz - verglichen mit der Spülung auf Basis von reinem C-18 LAO - in mehrfacher Weise vorteilhaft auswirken können.

### Beispiele 5 bis 8

Als geschlossene Ölphase wurden in der vorstehend beschriebenen Grundrezeptur Abmischungen von linearen alpha-Olefinen (LAO) mit 16 bzw. 14 C-Atomen, d. h. C-16 LAO und C-14 LAO (Handelsprodukt der Fa. Shell), mit Fettalkohol-Gemisch im Kettenlängenbereich C_{12/18} sowie mit technischen Oleylalkohol, Jodzahl 80/85, eingesetzt. Die Zusammensetzung der Ölphase ist aus Tabelle 4 ersichtlich.

**Tabelle 4**

| Beispiel | 5 | 6 | 7 | 8 |
|---|---|---|---|---|
| C-16 LAO ml | 128,7 | 96,5 | 128,7 | |
| C-14 LAO ml | | | | 128,7 |
| C_{12/18}-Fettalkohol ml | 64,3 | 96,5 | | |
| Oleylalkohol 1 ml | | | 64,3 | 64,3 |

Die nachfolgende Tabelle 5 zeigt die bei 50 °C bestimmten Spülungsdaten nach Alterung für 16 h bei 200 °C im Roller-Oven für diese Beispiele. Die Angaben in [] geben die in lb/100 ft² gemessenen Original-Werte wieder.

**Tabelle 5**

| Beispiel | 5 | 6 | 7 | 8 |
|---|---|---|---|---|
| PV (mPas) | 22 | 43 | 25 | 20 |
| YP (Pa) | 21[43] | 35[73] | 20[41] | 16[34] |
| 10"/10' Gelstärke (Pa) | 8/7 | 15/15 | 7/8 | 6/6 |
| | [16/14] | [31/31] | [15/16] | [13/13] |

### Beispiele 9 und 10

C-14 LAO (Handelsprodukt der Firma Shell) wird in 2 Ansätzen mit unter-schiedlichen Mengen an raffiniertem Rüböl vermischt. Im ersten Fall (Beispiel 9) enthält die Mischölphase das C-14 LAO in einer Menge von 66,6 Gew.-%, im zweiten Fall (Beispiel 10) beträgt die C-14 LAO-Menge 50 Gew.-% - Gew.-% in beiden Fällen bezogen auf die Mischung des C-14 LAO und des zugemischten Rüböles.

Unter Einsatz dieser beiden Ölphasen werden gemäß der eingangs der Beispiele angegebenen Standardrezeptur für ölbasierte Bohrspülsysteme vom W/O-Typ entsprechende Abmischungen zusammengestellt. Wie in den vorherigen Beispielen werden jeweils am ungealterten und am gealterten Material die Viskositätswerte - Plastische Viskosität (PV), Fließgrenze (YP) sowie die Gelstärke nach 10 sec. und 10 min. - bestimmt. Auch hier erfolgte die Alterung der jeweiligen Bohrspülung durch Behandlung für den Zeitraum von 16 Stunden bei 200°C im Autoklaven gemäß den Angaben zu den vorherigen Beispielen.

Die an den nicht gealterten und den gealterten Spülungen bestimmten Daten sind in den nachfolgenden Tabellen 6 (frisch angesetzte Spülung) und Tabelle 7 (gealterte Spülung) zusammengefaßt.

**Tabelle 6***

| (nicht gealtertes Material) | | |
|---|---|---|
| Beispiele | 9 | 10 |
| PV (mPas) | 54 | 93 |
| YP (Pa) | 60 [125] | 47 [98] |
| 10"/10" Gelstärke (Pa) | 35/35 [73/73] | 39/28 [81/59] |

**Tabelle 7***

| (gealtert 16h/200°C) | | |
|---|---|---|
| Beispiele | 9 | 10 |
| PV (mPas) | 40 | 49 |
| YP (Pa) | 13 [28] | 14 [30] |
| 10"/10" Gelstärke (Pa) | 2/2 [4/4] | 1/2 [3/4] |
| * In [ ] Original-Meßwerte in lb/100 ft² | | |

## Patentansprüche

1. Verwendung von im Temperaturbereich von 0 bis 20 °C fließ- und pumpfähigen Lösungen von linearen alpha-Olefinen LAO mit Flammpunkten von wenigstens 80 °C in Abmischung mit sowohl aerob als auch anaerob abbaubaren, wasserunlöslichen Ölen, dadurch gekennzeichnet, daß die wasserunlöslichen Öle aus den Klassen oleophiler Alkohole, Ether, Kohlensäureester und/oder Esterölen von Monocarbonsäuren aus einer der nachfolgenden Unterklassen
a) Ester aus C₁₋₅-Monocarbonsäuren und 1- und/oder mehrfunktionellen Alkoholen, wobei Reste aus 1-wertigen Alkoholen wenigstens 6 C-Atome aufweisen und die mehrwertigen Alkohole 2 bis 6 C-Atome im Molekül besitzen,
b) Ester aus aliphatisch gesättigten Monocarbonsäuren synthetischen und/oder natürlichen Ursprungs mit 6 bis 16 C-Atomen und 1- und/oder mehrfunktionellen Alkoholen der unter a) genannten Art,
c) Ester olefinisch 1- und/oder mehrfach ungesättigter Monocarbonsäuren mit bis 24 C-Atomen und monofunktionellen geradkettigen und/oder verzweigten Alkoholen
ausgewählt sind, als geschlossene oder disperse Ölphase von öl- bzw. wasserbasierten Bohrspülungen oder anderen Bohrlochbehandlungsmitteln, die im Falle der ölbasierten Behandlungsmittel auch als W/O-Emulsion mit einer dispersen wäßrigen Phase vorliegen können.

2. Ausführungsform nach Anspruch 1, dadurch gekennzeichnet, daß LAO beziehungsweise LAO-Gemische mit 12 bis 30 C-Atomen im Molekül, verwendet werden.

3. Ausführungsform nach Anspruch 2, dadurch gekennzeichnet, daß LAO beziehungsweise LAO-Gemische mit 14 bis 24 C-Atomen im Molekül, verwendet werden.

4. Ausführungsform nach Ansprüchen 1 bis 3, dadurch gekennzeichnet, daß die LAO in der Ölphase in Mengen von wenigstens 5 Gew.-% in Abmischung mit den anderen Ölen vorliegen, wobei der obere Grenzwert für die LAO-Anteile in der Ölphase bei 90 Gew.-% liegt.

5. Ausführungsform nach Ansprüchen 1 bis 4, dadurch gekennzeichnet, daß die LAO in der Ölphase in Mengen von wenigstens 20 Gew.-% in Abmischung mit den anderen Ölen vorliegen, wobei der obere Grenzwert für die LAO-Anteile in der Ölphase bei 75 Gew.-% liegt.

6. Ausführungsform nach Ansprüchen 1 bis 5, dadurch gekennzeichnet, daß LAO-enthaltende Ölphasen verwendet werden, die beim Einsatz als geschlossene Ölphase Erstarrungswerte (Fließ- und Stockpunkt) unterhalb 0°C, vorzugsweise unterhalb -5°C aufweisen und dabei im Temperaturbereich von 0 bis 5°C eine Brookfield(RVT)-Viskosität nicht über 55 mPas, vorzugsweise nicht über 45 mPas besitzen, während im Falle der O/W-Emulsionsspülungen die Ölphase bei 20°C eine Brookfield(RVT)-Viskosität bis etwa 3 Mio mPas, vorzugsweise bis etwa 1 Mio mPas besitzen kann.

7. Ausführungsform nach Ansprüchen 1 bis 6, dadurch gekennzeichnet, daß auch beim Einsatz von Abmischungen der LAO mit weiteren löslichen Ölphasen solche Mischungskomponenten eingesetzt werden, daß die Flammpunkte der Ölmischphasen oberhalb 100°C liegen.

8. Ausführungsform nach Ansprüchen 1 bis 7, dadurch gekennzeichnet, daß die LAO zusammen mit Esterölen aus den Klassen der Monocarbonsäureester, der Polycarbonsäureester und/oder der Kohlensäureester zum Einsatz kommen, wobei hier solche Mischungskomponenten bevorzugt sind, die auch bei partieller Verseifung im praktischen Einsatz keine toxikologischen, insbesondere keine inhalationstoxikologischen Gefährdungen auslösen.

9. Ausführungsform nach Ansprüchen 1 bis 8, dadurch gekennzeichnet, daß bei der Mitverwendung von Polycarbonsäureestern in der Ölphase entsprechende hochviskose Komplexester mit ausgeprägtem Schmierstoffcharakter auf Basis von polyfunktionellen Carbonsäuren und polyfunktionellen Alkoholen sowie gegebenenfalls einkondensierten monofunktionellen Alkoholen und/oder Monocarbonsäuren mitverwendet werden.

10. Ausführungsform nach Ansprüchen 1 bis 9, dadurch gekennzeichnet, daß die LAO in Bohrspülungen zum Einsatz kommen, die als W/O-Invertemulsion ausgebildet sind und eine feindisperse wäßrige Phase in Mengen von 5 bis 60 Gew.-% enthalten, beziehungsweise als O/W-Emulsion ausgebildet sind und dabei die disperse Ölphase 1 bis 50 Gew.-% ausmacht.

11. Ausführungsform nach Ansprüchen 1 bis 10, dadurch gekennzeichnet, daß die LAO-haltigen Ölphasen in Bohrlochbehandlungsmitteln, insbesondere in Bohrspülungen zum Einsatz kommen, die im praktischen Einsatz Arbeitstemperaturen oberhalb 150°C ausgesetzt werden.

12. Im Temperaturbereich von 5 bis 20 °C fließ- und pumpfähige Bohrlochbehandlungsmittel, insbesondere Bohrspülungen, entweder auf Basis einer geschlossenen Ölphase, gewünschtenfalls in Abmischung mit einer beschränkten Menge einer dispersen wäßrigen Phase (W/O-Invert-Typ) oder auf Basis einer O/W-Emulsion mit disperser Ölphase in der geschlossenen wäßrigen Phase, gewünschtenfalls enthaltend gelöste und/oder dispergierte übliche Hilfsstoffe wie Viskositätsbildner, Emulgatoren, Fluid-loss-Additive, Netzmittel, feinteilige Beschwerungsstoffe, Salze, Alkalireserven und/oder Biozide, dadurch gekennzeichnet, daß sie in ihrer Ölphase lineare und alpha-ständig olefinisch ungesättigte Kohlenwasserstoffverbindungen (LAO) mit Flammpunkten von wenigstens 80 °C in Abmischung mit sowohl aerob als auch anaerob abbaubaren Ölen enthalten, die ausgewählt sind aus den Klassen oleophiler Alkohole, Ether, Kohlensäureester und/oder Esterölen von Monocarbonsäuren aus einer der nachfolgenden Unterklassen
a) Ester aus C₁₋₅-Monocarbonsäuren und 1- und/oder mehrfunktionellen Alkoholen, wobei Reste aus 1-wertigen Alkoholen wenigstens 6 C-Atome aufweisen und die mehrwertigen Alkohole 2 bis 6 C-Atome im Molekül besitzen,
b) Ester aus aliphatisch gesättigten Monocarbonsäuren synthetischen und/oder natürlichen Ursprungs mit 6 bis 16 C-Atomen und 1- und/oder mehrfunktionellenAlkoholen der unter a) genannten Art,
c) Ester olefinisch 1- und/oder mehrfach ungesättigter Monocarbonsäuren mit bis 24 C-Atomen und monofunktionellen geradkettigen und/oder verzweigten Alkoholen.

13. Bohrlochbehandlungsmittel nach Anspruch 12, dadurch gekennzeichnet, daß die in der Ölphase vorliegenden LAO beziehungsweise LAO-Gemische entsprechende Verbindungen mit 12 bis 30 C-Atomen im Molekül sind.

14. Bohrlochbehandlungsmittel nach Ansprüchen 12 und 13, dadurch gekennzeichnet, daß die Ölphase Flammpunkte oberhalb 100°C aufweist.

15. Bohrlochbehandlungsmittel nach Ansprüchen 12 bis 14, dadurch gekennzeichnet, daß sie als Invert-Bohrspülungen vom W/O-Typ ausgebildet sind und dabei die disperse wäßrige Phase in Mengen von 5 bis 60 Gew.-% enthalten, während im Fall der wasserbasierten O/W-Emulsionsspülungen die Menge der dispersen Ölphase im Bereich von 1 bis 50 Gew.-% und vorzugsweise von etwa 8 bis 50 Gew.-% liegt.

16. Bohrlochbehandlungsmittel nach Ansprüchen 12 bis 15, dadurch gekennzeichnet, daß sie als ölbasierte Bohrspülungen vom Invert-Typ eine plastische Viskosität (PV) im Bereich von 10 bis 60 mPas und eine Fließgrenze (Yield Point YP) im Bereich von 2 bis 19 Pa (5 bis 40 lb/100ft²) - jeweils bestimmt bei 50°C - aufweisen.

17. Bohrlochbehandlungsmittel nach Ansprüchen 12 bis 16, dadurch gekennzeichnet, daß die geschlossene Ölphase des Invert-Schlammes im Temperaturbereich von 0 bis 5°C eine Brookfield(RVT)-Viskosität unterhalb 50 mPas aufweist.

18. Bohrlochbehandlungsmittel nach Ansprüchen 12 bis 17, dadurch gekennzeichnet, daß sie auf einen pH-Wert im Bereich von etwa neutral bis mäßig basisch, insbesondere auf den Bereich von 7,5 bis 11 eingestellt sind, wobei der Einsatz von Kalk als Alkalireserve besonders bevorzugt sein kann.

## Claims

1. The use of solutions flowable and pumpable at 0 to 20 °C of linear alpha-olefins (LAO) with flashpoints of at least 80 °C in admixture with both aerobically and anaerobically degradable water-insoluble oils, characterized in that the water-insoluble oils are selected from the classes of oleophilic alcohols, ethers, carbonic acid esters and/or ester oils of monocarboxylic acids from one of the following subclasses:
a) ester of C₁₋₅ monocarboxylic acids and monohydric and/or polyhydric alcohols, residues of monohydric alcohols containing at least 6 carbon atoms and the polyhydric alcohols containing 2 to 6 carbon atoms in the molecule,
b) ester of aliphatically saturated monocarboxylic acids of synthetic and/or natural origin containing 6 to 16 carbon atoms and monohydric and/or polyhydric alcohols of the type mentioned under a),
c) esters of mono- and/or poly-olefinically unsaturated monocarboxylic acids containing up to 24 carbon atoms and monohydric linear and/or branched alcohols
as the continuous or disperse oil phase of oil-based or water-based drilling fluids or other borehole servicing preparations which, in the case of the oilbased servicing preparations, may also be present as a w/o emulsion with a disperse aqueous phase.

2. The use claimed in claim 1, characterized in that LAO or mixtures of LAO containing 12 to 30 carbon atoms in the molecule are used.

3. The use claimed in claim 2, characterized in the LAO or mixtures of LAO containing 14 to 24 carbon atoms in the molecule are used.

4. The use claimed in claims 1 to 3, characterized in that the LAO are present in the oil phase in quantities of at least 5 % by weight in admixture with the other oils, upper limits to the LAO component of the oil phase being 90 % by weight.

5. The use claimed in claims 1 to 4, characterized in that the LAO are present in the oil phase in quantities of at least 20 % by weight in admixture with the other oils, upper limits to the LAO component of the oil phase being 75 % by weight.

6. The use claimed in claims 1 to 5, characterized in that LAO-containing oil phases are used which, as a continuous oil phase, have solidification values (flow and pour point) below 0 °C and preferably below -5 °C and show a Brookfield (RVT) viscosity at 0 to 5 °C of not more than 55 mPas and preferably not more than 45 mPas whereas, in the case of o/w emulsion drilling fluids, the oil phase can have a Brookfield (RVT) viscosity at 20 °C of up to about 3 million mPas and preferably up to about 1 million mPas.

7. The use claimed in claims 1 to 6, characterized in that, where mixtures of the LAO with other soluble oil phases are used, the mixture components are selected so that the mixed oil phases have flash points above 100 °C.

8. The use claimed in claims 1 to 7, characterized in that the LAO are used together with ester oils from the classes of monocarboxylic acid esters, polycarboxylic acid esters and/or carbonic acid esters, mixture components which do not involve any toxicological risks, more particularly inhalation-toxicological risks, even in the event of partial saponification in practice, being preferred in this case.

9. The use claimed in claims 1 to 8, characterized in that, where polycarboxylic acid esters are used in the oil phase, corresponding highly viscous complex esters with a pronounced lubricant character based on polybasic carboxylic acids and polyhydric alcohols and optionally cocondensed monohydric alcohols and/or monocarboxylic acids are used.

10. The use claimed in claims 1 to 9, characterized in that the LAO are used in drilling fluids which are formulated as a w/o invert emulsion and contain a finely disperse aqueous phase in quantities of 5 to 60% by weight or which are formulated as an o/w emulsion, in which case the disperse oil phase makes up 1 to 50% by weight.

11. The use claimed in claims 1 to 10, characterized in that the LAO-containing oil phases are used in borehole servicing preparations, more particularly in drilling fluids, which are exposed in use to temperatures above 150 °C.

12. Borehole servicing preparations, more particularly drilling fluids, flowable and pumpable at temperatures of 5 to 20 °C based either on a continous oil phase, optionally in admixture with a limited quantity of a disperse aqueous phase (w/o invert type), or on an o/w emulsion with a disperse oil phase in the continuous aqueous phase, these preparations optionally containing typical dissolved and/or disperse auxiliaries, such as viscosifiers, emulsifiers, fluid loss additives, wetting agents, fine-particle weighting agents, salts, alkali reserves and/or biocides, characterized in that the preparations contain in their oil phase linear hydrocarbon compounds olefinically unsaturated in the alpha position (LAO) with flashpoints of at least 80 °C in admixture with both aerobically and anaerobically degradable oils selected from the classes of oleophilic alcohols, ethers, carbonic acid esters and/or ester oils of monocarboxylic acids from one of the following subclasses:
a) esters of C 1-5 monocarboxylic acids and monohydric and/or polyhydric alcohols, residues of monohydric alcohols containing at least 6 carbon atoms and the polyhydric alcohols containing 2 to 6 carbon atoms in the molecule,
b) esters of aliphatically saturated monocarboxylic acids of synthetic and/or natural origin containing 6 to 16 carbon atoms and monohydric and/or polyhydric alcohols of the type mentioned under a),
c) esters of mono- and/or poly-olefinically unsaturated monocarboxylic acids containing up to 24 carbon atoms and monohydric linear and/or branched alcohols

13. Borehole servicing preparations as claimed in claim 12, characterized in that the LAO or mixtures of LAO present in the oil phase are corresponding compounds containing 12 to 30 carbon atoms in the molecule.

14. Borehole servicing preparations as claimed in claims 12 and 13, characterized in that the oil phase has flashpoints above 100 °C.

15. Borehole servicing preparations as claimed in claims 12 to 14, characterized in that they are formulated as invert drilling fluids of the w/o type and contain the disperse aqueous phase in quantities of 5 to 60% by weight whereas, in the case of the water-based o/w emulsion drilling fluids, the quantity of disperse oil phase is in the range from 1 to 50% by weight and preferably in the range from 8 to 50% by weight.

16. Borehole servicing preparations as claimed in claims 12 to 15, characterized in that, as oil-based drilling fluids of the invert type, they have a plastic viscosity (PV) of 10 to 60 mPas, as determined at 50 °C, and a yield point (YP) of 2 to 19 Pa (5 to 40 lb/100 ft²), as determined at 50 °C.

17. Borehole servicing preparations as claimed in claims 12 to 16, characterized in that the continuous oil phase of the invert mud has a Brookfield (RVT) viscosity at 0 to 5 °C of less than 50 mPas.

18. Borehole servicing preparations as claimed in claims 12 to 17, characterized in that they are adjusted to a pH value in the range from substantially neutral to moderately basic and, more particularly, to a pH value in the range from 7.5 to 11, the use of lime as an alkali reserve being particularly preferable.

## Revendications

1. Utilisation de solution aptes à l'écoulement et pompables dans la zone de température allant de 0 à 20°C d'alpha oléfines linéaires LAO ayant des points d'inflammation d'au moins 80°C, en mélange avec des huiles insolubles dans l'eau dégradables aussi bien par voie aérobie qu'aussi anaérobie,
caractérisée en ce que
les huiles insolubles dans l'eau sont choisies dans les classes des alcools oléophiles, des éthers, des esters d'acide carbonique et/ou des huiles estérifiées d'acide monocarboxylique, provenant d'une des sous-classes suivantes :
a) les esters d'acide monocarboxylique en C₁-C₅ et d'alcools mono- et/ou plurifonctionnels, dans lesquels les radicaux provenant d'alccols monovalents possèdent au moins 6 atomes de carbone et les alcools plurivalents possèdent de 2 à 6 atomes de carbone dans la molécule,
b) les esters à base d'acide monocarboxylique saturés aliphatiquement, d'origine synthétique et/ou naturelle, ayant de 6 à 16 atomes de carbone, et d'alcools mono- et plurifonctionnels du type cité sous a),
c) les esters d'acide monocarboxylique une fois et/ou plusieurs fois non saturé ayant jusqu'à 24 atomes de carbone, et d'alcools monofonctionnels à chaîne droite et/ou ramifiés,
en tant que phase huileuse continue ou dispersée de liquides de rinçage de forage, basés sur l'huile ou sur l'eau ou d'autres agents de traitement de trous de forage, qui peuvent se présenter, dans le cas d'agents de traitement basés sur l'huile, aussi sous forme d'émulsion W/O avec une phase aqueuse dispersée.

2. Mode d'exécution selon la revendication 1,
caractérisé en ce qu'
on utilise des LAO ou des mélanges de LAO ayant de 12 à 30 atomes de carbone dans la molécule.

3. Mode d'exécution selon la revendication 2,
caractérisé en ce qu'
on utilise des LAO ou des mélanges de LAO ayant de 14 à 24 atomes de carbone dans la molécule.

4. Mode d'exécution selon les revendications 1 à 3,
caractérisé en ce que
les LAO se présentent dans la phase huileuse en quantités d'au moins 5 % en poids en mélange avec les autres huiles pour lesquelles la valeur limite supérieure pour la proportion de LAO dans la phase huileuse se situe à 90 % en poids.

5. Mode d'exécution selon les revendications 1 à 4,
caractérisé en ce que
les LAO dans la phase huileuse se présentent en quantités d'au moins 20 % en poids en mélange avec les autres huiles, pour lesquelles la valeur limite supérieure pour la proportion de LAO dans la phase huileuse se situe à 75 % en poids.

6. Mode d'exécution selon les revendications 1 à 5,
caractérisé en ce qu'
on utilise les phases huileuses renfermant les LAO qui possèdent lors de l'utilisation comme phase huileuse continue, des valeurs de solidification (point d'écoulement et point de solidification) en dessous de 0°C, de préférence en dessous de -5°C et allant de 0 à 5°C, une viscosité Brookfield (RVT) qui n'est pas supérieure à 55 mPas, de préférence pas supérieure à 45 mPas alors que dans le cas de liquides de rinçage en émulsion O/W, la phase huileuse peut posséder à 20°C une viscosité Brookfield (RVT) allant jusqu'à environ 3 millions de mPas, de préférence jusqu'à environ 1 million de mPas.

7. Mode d'exécution selon les revendications 1 à 6,
caractérisé en ce qu'
on met en oeuvre aussi lors de l'utilisation de mélanges de LAO avec d'autres phases huileuses solubles, des composants de mélange tel que les points d'inflammation des phases mixtes huileuses se situent au-dessus de 100°C.

8. Mode d'exécution selon les revendications 1 à 7,
caractérisé en ce que
les LAO viennent à utilisation conjointement avec les huiles estérifiées choisies dans les classes des esters d'acide monocarboxylique, des esters d'acide polycarboxylique, et/ou des esters d'acide carboxylique, parmi lesquels on préfère ici les composants de mélange qui ne déclenchent aussi lors d'une saponification partielle en utilisation pratique, aucun danger toxicologique en particulier aucun danger de toxicologie par inhalation.

9. Mode d'exécution selon les revendications 1 à 8,
caractérisé en ce qu'
on utilise conjointement lors de l'utilisation conjointe des esters d'acide polycarboxylique dans la phase huileuse, des esters complexes hautement visqueux correspondants ayant un caractère marqué de lubrifiant à base d'acides carboxyliques polyfonctionnels et d'alcools polyfonctionnels, ainsi qu'éventuellement des alcools monofonctionnels simplement condensés et des acides monocarboxyliques.

10. Mode d'exécution selon les revendications 1 à 9,
caractérisé en ce que
les LAO viennent utilisation dans les solutions de rinçage de forage qui sont formées sous forme d'émulsion inverse W/O et renferment une phase aqueuse finement dispersée en quantités allant de 5 à 60 % en poids, ou sous forme d'émulsion O/W et ainsi la phase huileuse dispersée représente de 1 à 50 % en poids.

11. Mode d'exécution selon les revendications 1 à 10,
caractérisé en ce que
les phases huileuses contenant les LAO dans les agents de traitement des trous de forage, en particulier dans le liquides de rinçage de puits, qui viennent à utilisation, sont exposées en utilisation pratique, à des températures de travail au-dessus de 150°C.

12. Agents de traitement de trous de forage aptes à l'écoulement et au pompage dans la zone de température allant de 5 à 20°C, en particulier des agents de rinçage pour puits à base d'une phase huileuse contenue, si désiré en mélange avec une quantité limitée d'une phase aqueuse dispersée (du type W/O inverse) ou à base d'une émulsion O/W ayant une phase huileuse dispersée dans la phase aqueuse continue, si désiré contenant des adjuvants usuels dissouts et/ou dispersés comme des agents formateurs de viscosité, des agents émulsionnants, des additifs de perte de fluide, des agents mouillants, des substances d'épaississement finement dispersés, des sels, des réserves d'alcali et/ou des biocides,
caractérisés en ce qu'
ils renferment dans leur phase huileuse des composés hydrocarbonés (LAO) linéaires et oléfiniquement non saturés, en position alpha, ayant des points d'inflammation d'au moins 80°C, en mélange avec des huiles dégradables aussi bien par voie aérobie qu'aussi anaérobie, qui sont choisis dans les classes d'alcools oléophiles, des éthers, des esters d'acide carbonique et/ou des huiles estérifiées d'acide monocarboxylique appartenant à l'une des sous-classes subséquentes :
a) les esters d'acide monocarboxylique en C₁-C₅ et d'alcools mono- et/ou plurifonctionnels, dans lesquels les radicaux provenant d'alcools monovalents possèdent au moins 6 atomes de carbone et les alcools plurivalents possèdent de 2 à 6 atomes de carbone dans la molécule,
b) les esters à base d'acide monocarboxylique saturés aliphatiquement d'origine synthétique et/ou naturelle ayant de 6 à 16 atomes de carbone, et d'alcools mono- et plurifonctionnels du type cité sous a),
c) les esters d'acide monocarboxylique une fois et/ou plusieurs fois non saturé ayant jusqu'à 24 atomes de carbone, et d'alcools monofonctionnels à chaîne droite et/ou ramifiés.

13. Agents de traitement de trous de forage selon la revendication 12,
caractérisés en ce que
les LAO ou les mélanges de LAO présents dans la phase huileuse sont des composés correspondants ayant de 12 à 30 atomes de carbone dans la molécule.

14. Agents de traitement de trous de forage selon les revendications 12 et 13,
caractérisés en ce que
la phase huileuse possède des points d'inflammation au-dessus de 100°C.

15. Agents de traitement de trous de forage selon les revendications 12 à 14,
caractérisés en ce qu'
ils sont formés sous forme de liquides de rinçage inverses du type W/O et ainsi renferment la phase aqueuse disperse en quantités allant de 5 à 60 % en poids, alors que dans le cas de liquide de rinçage en émulsion O/W basés sur l'eau, la quantité de phase huileuse disperse se situe dans la zone allant de 1 à 50 % en poids et de préférence allant d'environ 8 à 50 % en poids.

16. Agents de traitement de trous de forage selon les revendications 12 à 15,
caractérisés en ce qu'
ils possèdent sous forme de liquides de rinçage de puits basés sur l'huile du type inverse, une viscosité plastique (VP) dans la zone de 10 à 60 mpas et une limite d'écoulement (Yield Point YP) dans la zone de 2 à 19 Pa (5 à 40 lb/100 ft²), à chaque fois déterminé à 50°C.

17. Agents de traitement de trous de forage selon les revendications 12 à 16,
caractérisés en ce que
la phase huileuse continue de la boue inverse possède dans la plage de température allant de 0 à 5°C une viscosité Broockfield (RVT) en dessous de 50 mPas.

18. Agents de traitement de trous de forage selon les revendications 12 à 17,
caractérisés en ce qu'
ils sont ajustés à une valeur de pH dans la zone d'environ neutre à modérément basique, en particulier à la zone allant de 7,5 à 11, pour laquelle l'utilisation de chaux en tant que réserve d'alcali peut être particulièrement préférée.
